# EUROPÄISCHE PATENTSCHRIFT

(11) **EP 0 854 425 B1**
(45) Veröffentlichungstag und Bekanntmachung des Hinweises auf die Patenterteilung: **04.09.2002**
(21) Anmeldenummer: 97250332.0
(22) Anmeldetag: 08.11.1997
(51) Int. Cl.: G06F 11/20, G06F 5/06, G07B 17/02

(54) **Anordnung und Verfahren zur Verbesserung der Datensicherheit mittels Ringpuffer**
Device and method for increasing data security with circular buffer
Dispositif et proédé pour augmenter la securité de données avec mémoire tampon circulaire

(30) Priorität: 26.11.1996 DE 19650993
(43) Veröffentlichungstag der Anmeldung: 22.07.1998
(73) Patentinhaber: Francotyp-Postalia AG & Co. KG, 16547 Birkenwerder (DE)
(72) Erfinder: Kruschinski, Marcus, 10405 Berlin (DE)

(56) Entgegenhaltungen:
- EP-A- 0 376 487
- US-A- 4 584 647

## Beschreibung

Die Erfindung betrifft eine Anordnung und ein Verfahren zur Verbesserung der Datensicherheit mittels Ringpuffer.

Zur Verbesserung der Datensicherheit von Speichern - wie sie für Datenverarbeitungsgeräte bzw. ähnliche Geräte und insbesondere für Frankiermaschinen benötigt werden - werden Schreib/Lese-Speicher zur nichtflüchtigen Speicherung eingesetzt. Diese Speicher weisen Speicherbereiche mit einer in der Regel größeren Anzahl von Zellen für Datensätze auf.
Gerade im Anwendungsfall für Frankiermaschinen wird eine hohe Zuverlässigkeit bei der Speicherung von Datensätzen gefordert, damit zum Beispiel Fehler beim Abrechnen geldwerter Daten vermieden werden, die große Folgekosten auslösen können. Bekanntermaßen erhöht sich die Zuverlässigkeit durch eine redundante Abspeicherung von Daten (US 4,675,841, US 5,109,507, US 5,021,963, EP 19 515 B1).

Es ist ein Verfahren zum Betreiben einer Datenverarbeitungsanlage aus der DE 42 17 830 C2 bekannt, bei dem die Datenverarbeitungsanlage mindestens einen kritischen Programmabschnitt in einem Programmmodul abarbeitet, der das Einschreiben von Informationen in einen ersten nichtflüchtigen Speicher veranlaßt. Zusätzlich zum ersten nichtflüchtigen Speicher existiert ein zweiter nichtflüchtiger Speicher zur redundanten Abspeicherung von Daten und ein dritter nichtflüchtiger Speicher zur Abspeicherung einer Zustandskennung. Vor einem unkritischen Programmabschnitt, der kein Einschreiben von Informationen in den ersten oder zweiten nichtflüchtigen Speicher veranlaßt, wird eine Zustandskennung von Null in den dritten nichtflüchtigen Speicher eingetragen, um den nachfolgenden Programmabschnitt als unkritisch zu kennzeichnen. Ein Zeigerzähler wird inkrementiert, um eine Zustandskennung abweichend von Null einzutragen, um damit den Beginn des nächsten kritischen Programmabschnittes zu kennzeichnen, der das Einschreiben von Informationen in den ersten nichtflüchtigen Speicher veranlaßt. Nach dessen Abarbeitung folgt ein weiterer kritischer Programmabschnitt zur redundanten Abspeicherung. Der Zeigerzähler wird inkrementiert, um mit einer entsprechenden Zustandskennung den Beginn des weiteren kritischen Programmabschnittes zu kennzeichnen, der das Einschreiben von Informationen in den zweiten nichtflüchtigen Speicher veranlaßt. Nach dessen Abarbeitung wird der Zeigerzähler wieder auf den Anfangszustand, d.h. Zustandskennung Null gesetzt und das Programmmodul beendet. Bei jeder Spannungswiederkehr kann anhand der Zustandskennung festgestellt werden, ob die Abarbeitung eines kritischen Programmabschnittes unterbrochen wurde, um diesen zu vollenden, d.h. um die Rekonstruktion des alten Datensatzes durchzuführen.
Beim Abbruch eines Einspeichervorganges, beispielsweise durch Zusammenbrüche in der Stromversorgung können Speicherfehler auch bei der Zustandskennung für einen kritischen Programmabschnitt entstehen. Durch eine redundante Abspeicherung der Zustandskennung kann, wenn die richtigen Zustandskennungen in der Überzahl sind, mittels einer Majoritätsprüfung entschieden werden, welche Zustandskennung die richtige ist. Bei der Plausibilitätsprüfung wird festgestellt, ob die Werte einem gültigen Wertebereich angehören.
Es wird damit ein hoher Speicherbedarf im nichtflüchtigen Schreib/Lese-Speicher benötigt, ohne daß dadurch mehr Datensätze abgespeichert werden könnten. In seltenen Fällen sind jedoch auch Fehler denkbar, wo die Werte einem gültigen Wertebereich angehören und auch die Majorität stellen, aber dennoch eine ungültige oder falsche Zustandskennung repräsentieren. Dann würde bei Spannungswiederkehr eine Korrektur der richtigen Datensätze zu falschen Datensätzen erfolgen. Die Einteilung eines Programmes in kritische und unkritische Bereiche ist angesichts der oft nachträglich noch eingeführten Programmänderungen arbeitsintensiv und fehlerträchtig. Es werden zusätzliche Vorkehrungen für Unterbrechungen benötigt, welche nicht aufgrund von Spannungsausfällen auftreten. In nachteiliger Weise müssen Programmabschnitte nach der Spannungswiederkehr bzw. nach dem Wiedereinschalten noch zu Ende abgearbeitet werden, hier setzt ein Gedanke der Erfindung an.

Anderenfalls tritt das Problem gar nicht erst auf, wenn die gerade ausgeführten Abrechnungsoperationen sicher abgeschlossen werden (DE 24 38 055 C2). Damit wird ein Fehler beim Abspeichern von vornherein vermieden, um so das Problem erst gar nicht entstehen zu lassen. Allerdings werden hier Mittel zur Erkennung eines bevorstehenden Spannungsausfalls und Beenden einer Operation benötigt. Dafür wird eine teuere Hardware eingesetzt, welche dann lediglich auf Spannungsausfall reagiert.

Eine andere Methode verwendet Mittel zur Erkennung eines zerstörten Datensatzes (EP 615 211 A1) bzw. zur Erkennung einer zerstörten Speicherzelle EP 226 205 B1. Das erfordert einen relativ hohen Speicherbedarf im Programmspeicher für die Fehlererkennungs- und Korrekturroutinen bzw. zur Umadressierung der Speicherzellen des nichtflüchtigen Speichers.

Das Dokument US-A-4 584 647 offenbart eine Anordnung zum Speichern von Datensätzen unter Verwendung eines allgemein bekannten nicht-flüchtigen Ringpuffers, der aus der gleichen Anzahl Speicherzellen besteht als die Anzahl der zu speichernden Datensätze, wobei ein Zeige-Zähler benutzt wird, um einen neuen Datensatz immer in die Speicherzelle zu schreiben, wo der älteste Datensatz gespeichert ist.

Der Erfindung liegt die Aufgabe zu Grunde, eine Anordnung und ein Verfahren zur Verbesserung der Datensicherheit mittels Ringpuffer zu schaffen, wobei die Anordnung mit unaufwendigen Mittel bzw. entsprechenden Schritten ausgestattet wird, um Fehler unwirksam zu machen, die durch Abbruch des Einspeichervorganges entstehen. Dabei sollen nach einem unterbrochenen Schreibvorgang bzw. nach Spannungswiederkehr keinerlei Korrektur oder Reparatur der Datensätze erforderlich werden.

Es ist eine Lösung zu schaffen, die ohne Erkennung eines bevorstehenden Spannungsausfalls auskommt und keine zusätzlichen Vorkehrungen für Unterbrechungen benötigt, welche nicht aufgrund von Spannungsausfällen auftreten. Die Lösung soll auf andere Operationen, als Abrechnungsoperationen, anwendbar sein. Ein Überschreiben der Speicherzellen mit neuen Datensätzen soll zyklisch erfolgen, wenn dieses Überschreiben der betreffenden Speicherzelle wieder an der Reihe ist.

Erfindungsgemäß wird diese Aufgabe gemäß dem Patentanspruch 1 für eine Anordnung bzw. Patentanspruch 6 für ein entsprechendes Verfahren gelöst.

Zur nichtflüchtigen Speicherung können wieder Schreib/Lese-Speicher eingesetzt werden. Diese Speicher weisen Speicherbereiche mit einer in der Regel größeren Anzahl von Speicherzellen für Datensätze auf, wobei ein Ringpuffer entsteht, wenn mindestens einer der Speicherbereiche durch einen Zähler verwaltet wird und im Speicherbereich eine bestimmte Anzahl von gleichartigen Datensätzen gespeichert wird. Mittels einem Programmspeicher ist ein Mikroprozessor entsprechend programmiert, so daß ein auslesbarer und beschreibbarer Ringpuffer im nichtflüchtigen Schreib/Lese-Speicher entsteht. Der aus einer Anzahl an Speicherzellen bestehende Ringpuffer wird erfindungsgemäß um eine Speicherzelle erweitert.

Unter einer solchen Speicherzelle ist vorzugsweise ein adressierbarer Speicherteilbereich für ein oder mehrere Bytes zu verstehen. Nachdem ein neuer Datensatz in eine Speicherzelle mit dem ältesten Datensatz eingeschrieben wurde, um den ältesten Datensatz zu überschreiben, wird der Zeigerzählerstand erhöht. Der Zeiger zeigt nun auf eine Speicherzelle mit einem jetzt ältesten Datensatz, der überschrieben werden darf. Dies ist zugleich der einzige Datensatz der bei einem Abbruch des Speichervorganges zerstört werden würde. Deshalb wird diese Speicherzelle für jedwede Lesezugriffe ignoriert, auch dann, wenn kein Abbruch des Speichervorganges erfolgte und vor dem Überschreiben kein Datensatz zerstört wurde. Ein erfolgloses Überschreiben des Datensatzes auf den der Zeiger zeigt, führt zu einer Fehlerroutine, gegebenenfalls mit Wiederholung des Schreibvorganges. Das Inkrementieren des Zeigerzählers erfolgt nur bei einem erfolgreich gespeicherten und damit korrekten Datensatz. Durch das Inkrementieren des Zeigerzählers nach dem erfolgreichen Speichervorgang wird der gespeicherte Datensatz gültig. Durch eine Lesesperre für denjenigen Datensatz, auf den der Zeiger zeigt, wird verhindert, daß ein Schreibfehler beim Einschreiben des neuen Datensatzes beim Auslesen wirksam werden kann. Das erfindungsgemäße Verfahren besteht darin, nach der Einspeicherung eines Datensatzes in eine ausgewählte Speicherzelle eines Ringpuffers den Zeigerzählerstand zu erhöhen und das Auslesen eines Datensatzes aus derjenigen Speicherzelle zu verhindern, auf welche der Zeiger zeigt. Weil immer nur Speicherplatz für einen Datensatz zusätzlich benötigt wird, unabhängig davon wie viele Datensätze insgesamt gespeichert werden müssen, fällt diese Erweiterung anteilmäßig um so geringer aus, je größer die Anzahl an Speicherzellen für einen Ringpuffer ist.

Es ist vorgesehen, daß die Inkrementierung des Zählerstandes durch eine Prozessorinstruktion innerhalb eines Taktzyklusses erfolgt und daß ein eine vollständige Abarbeitung mindestens der gerade vom Prozessor abgearbeiteten Instruktion sicherndes Hardwaremittel Bestandteil des Mikroprozessors oder eine separate Baugruppe ist, welche am Mikroprozessor entsprechend angeschlossen ist. Weitere Ausführungen sind den Unteransprüchen entnehmbar.
Ein Ausführungsbeispiel der Erfindung wird nachstehend anhand der Figuren näher erläutert. Es zeigen:
- Fig.1: eine Anordnung für eine Frankiermaschine mit einen nichtflüchtigen Speicher, der erfindungsgemäß als Ringpuffer betrieben wird,
- Fig.2a: eine Struktur für einen Ringpuffer mit Speicherzellen für fünf Datensätze im Zustand vor dem Einschreiben des Datensatzes 15,
- Fig.2b: eine Struktur für einen Ringpuffer mit Speicherzellen für fünf Datensätze im Zustand nach dem Einschreiben des Datensatzes 15,
- Fig.3: einen Flußplan für den Betrieb des Ringpuffers.

Zur Vereinfachung und zum leichteren Verständnis sind die Darstellungen teilweise schematisiert ausgeführt.

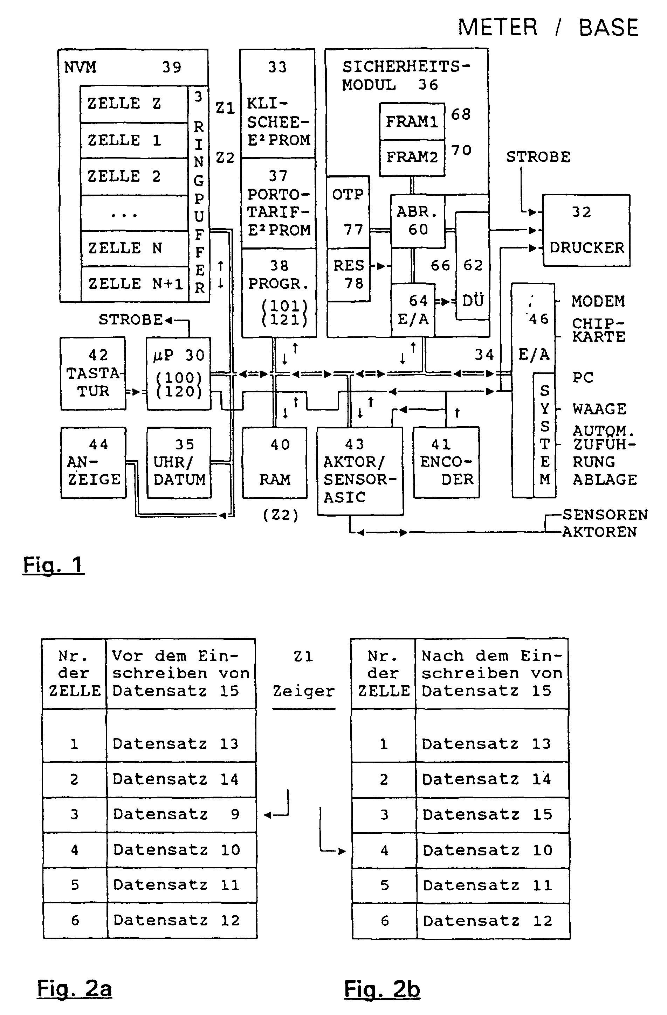

Zur nichtflüchtigen Speicherung ist ein Schreib/Lese-Speicher 39 mit einem Mikroprozessor CPU 30 verbunden. Die Fig. 1 zeigt eine Anordnung für eine Frankiermaschine mit einen nichtflüchtigen Speicher 39, der erfindungsgemäß als Ringpuffer betrieben wird. Diese Speicher weisen Speicherbereiche mit einer größeren Anzahl von Speicherzellen für Datensätze auf. Der Mikroprozessor CPU 30 ist in üblicher Weise mit einem flüchtigen Arbeitsspeicher RAM 40 gekoppelt, welcher die Arbeitsvariablen, Pixeldaten speichert und den Stackbereich für die verschiedenen Tasks bildet, bzw. mit einem internen RAM ausgestattet. Der Mikroprozessor CPU 30 ist mit einem Programmspeicher ROM 38 verbunden bzw. mit einem internen Rom ausgestattet, mit welchem der Mikroprozessor CPU 30 entsprechend programmiert ist, so daß ein Ringpuffer im nichtflüchtigen Schreib/Lese-Speicher 39 entsteht. Der nichtflüchtige Schreib/Lese-Speicher 39 ist beispielsweise ein NV-CMOS-RAM oder ein E²PROM. Der Mikroprozessor CPU 30 ist entsprechend programmiert, um einen zyklischen Zähler zu bilden und dazu, um mindestens einen der Speicherbereiche durch den Zähler zu verwalten, wobei im vorgenannten Speicherbereich eine bestimmte Anzahl von gleichartigen Datensätzen gespeichert werden kann. Am Mikroprozessor CPU 30 sind weiterhin ein Klischeespeicher 33, ein batteriegestützter Uhren/Datumsbaustein 35, ein Portotarifspeicher 37 sowie Eingabemittel und Ausgabemittel angeschlossen. Ein Eingabemittel ist die Tastatur 42. Ein weiteres - nicht dargestelltes - kann ein Modem oder eine Chipkarten-Schreib/Leseeinheit sein und fungiert ggf. auch als Ausgabemittel. Ein Ausgabemittel ist eine Anzeigeeinheit 44, beispielsweise ein LCD-Display mit zugehörigem Controller und ein weiteres Ausgabemittel ist ein Drucker 32, insbesondere ein frankiermaschineninternen Drucker, der während des Druckens nicht bewegt wird und mit welchem mindestens ein Frankierstempelabdruck auf ein Postgut gedruckt werden kann. Die Abrechnung kann separat in einem Sicherheitsmodul 36 erfolgen, wie das in der nicht vorveröffentlichten deutschen Anmeldung 196 03 467.1 mit dem Titel Frankiermaschine näher erläutert wird. Der Sicherheitsmodul 36 weist einen OTP-Prozessor (one time programmable) 77, einen Reset-Baustein 78 zum Starten bei Spannungswiederkehr und einen anwenderspezifischen Baustein 66 mit einer Abrecheneinheit 60 sowie mit angeschlossenen FRAM-Speichern 68 und 70 auf. Die Abrechnungsdaten werden über einen BUS 34 in der Base zur Schnittstelle 64 des anwenderspezifischen Bausteins 66 übermittelt und gelangen von dort zur Abrecheneinheit 60, welche die Abrechnung hardwaremäßig vornimmt. Auch die Druckdaten werden über eine Schnittstelle 64 und Druckerüberwachungseinheit 62 des anwenderspezifischen Bausteins 66 zum Druckkopf des Druckers 32 übermittelt. Eine andere in EP 716 398 A2 vorgeschlagene Ausführungsform einer Frankiermaschine sieht einen geeigneten OTP-Prozessor mit nichtflüchtigen Speicher zur Abrechnung statt dem Sicherheitsmodul und ein ASIC in der Schnittstelle zur Base mit Druckdatensteuerung vor.
Der Mikroprozessor CPU 30 ist vorzugsweise im Meter der Frankiermaschine angeordnet und steht mit einer frankiermaschinen-internen Schnittstelle zur Base insbesondere mit einer Aktor/Sensor-Steuerung 43 und mit einem Encoder 41 zur Bestimmung der Transportgeschwindigkeit des Postgutes in Verbindung, wie dies schon prinzipiell in der EP 716 398 A2 vorgeschlagen wurde. Einer der Aktoren ist ein Briefsensor, der das Erreichen der Druckposition eines Briefes oder anderen Postgutes bestimmt, wobei Briefdicken bis 20 mm möglich sind. Bei höheren Dicken des Postgutes kann mit einem - nicht gezeigten - Streifengeber für Frankierstreifen gearbeitet werden, welcher ebenfalls über die Aktor/Sensor-Steuerung 43 mit dem Mikroprozessor CPU 30 verbunden ist. Außerdem ist eine E/A-Einheit 46 mit Schnittstellen für Modem und/oder Chipkarten-Schreib/Leseeinheit und mit Systemschnittstellen zur Ankopplung weiterer externer Geräte, beispielsweise einer externen Waage, einer automatischen Postgutzuführung, einer Postgutablage oder einem Personalcomputer PC vorgesehen.
Die hardwaremäßige Abrechnung ist schnell und manipulationssicher, so daß somit keine Abrechnungsfehler entstehen können. Die Frankiermaschine ist dennoch ein so kompliziertes Gerät, daß immer noch Fehler insbesondere in Verbindung mit dem Transport und dem Drucken auf das Postgut auftreten können, welche aber behebbar sind. Somit kann die Frankiermaschine trotz aufgetretener Fehler noch einige Zeit betrieben werden, wenn diese nicht so schwerwiegend sind, daß die Frankiermaschine für einen weiteren Betrieb sofort gesperrt wird. Ein erfindungsgemäßer Ringpuffer 3 wird beispielsweise bei der Fehlerspeicherung vorzugsweise für die letzten zwanzig Fehler eingesetzt, damit die Frankiermaschine anhand dieser Fehler erforderlichenfalls vom Servicetechniker analysiert werden kann. Um einen zyklischen Zeigerzähler und einen Ringpuffer 3 zu bilden, sind in Verbindung mit dem Prozessor hardware- und/oder softwaremäßige Mitter 100, 101 vorgesehen. Der nichtflüchtige Schreib/Lese-Speicher 39 weist Speicherzellen 1 bis N für n Datensätze von beispielsweise x Datensätzen und erfindungsgemäß eine zusätzliche Speicherzelle N+1 auf. Vorzugsweise ist der Mikroprozessor 30 durch ein im Programmspeicher 38 gespeichertes Programm 101 entsprechend programmiert worden, um beispielsweise den zyklischen Zeigerzähler zu bilden.
Der Zeigerzählerstand des Zeigers Z1 kann in einer Speicherzelle Z des Schreib/Lese-Speichers 39 nichtflüchtig gespeichert werden. In einer - nicht gezeigten - Variante wird der zyklische Zeigerzähler durch Hardwaremittel 100 realisiert und ist mit dem nichtflüchtigen Schreib/Lese-Speicher 39 gekoppelt. Die Hardwaremittel 100 können separat angeordnet oder Bestandteil des Mikroprozessors 30 sein.

Es sind weitere Mittel 30, 38, 120, 121 vorgesehen, um einen weiteren Zeigerzähler mit einem zweiten Zeiger Z2 zum Auslesen der Daten aus den anderen Speicherzellen zu bilden. Die Zeigerzähler zum Auslesen der Daten aus den Speicherzellen werden vorzugsweise durch Hardware- und/oder Softwaremittel 120, 121 gebildet. Der Zeigerzählerstand des weiteren Zeigers Z2 kann gegebenenfalls in einer (nicht gezeigten) weiteren Speicherzelle nichtflüchtig im Schreib/Lese-Speichers 39 oder im Arbeitsspeicher RAM 40 flüchtig gespeichert werden. Der Mikroprozessor 30 ist durch ein im Programmspeicher 38 gespeichertes Programm 121 entsprechend programmiert, um die jeweilige Speicherzelle für jedwede Lesezugriffe zu ignorieren, auf welche der Zeiger Z1 des zyklischen Zeigerzählers zeigt. Die vorgenannten im Ringpuffer gespeicherten Daten bzw. Fehlerdaten können zum Auslesen beispielsweise per Menü einzeln aufgerufen und mittels Display angezeigt werden, wenn zuvor vom Servicetechniker ein entsprechender Code per Tastatur eingegeben wurde. In einer anderen bevorzugten Variante können die vorgenannten im Ringpuffer gespeicherten Fehlerdaten mittels des frankiermaschineninternen Druckers ausgedruckt werden. Bei einem fehlerhaften Drucker kann der Ringpuffer auch über eine Schnittstelle mittels Servicecomputer ausgelesen werden, um automatisch eine Diagnose zu erstellen, welche Teile der Frankiermaschine gewartet oder ausgetauscht werden müssen.

Die Figuren 2a und 2b zeigen je eine Struktur für Zustände eines Ringpuffers mit Speicherzellen. Der Einfachheit halber sind Speicherzellen nur für fünf Datensätze von x Datensätzen gezeigt. Die gespeicherten fünf Datensätze sind typischer Weise direkt aufeinanderfolgend abgelegt. Die Speicherzelle, welche beispielsweise bei einem Spannungsausfall beschrieben wurde enthält meist unbrauchbare Daten. Die Speicherzelle, auf die der Zeiger zeigt, kann deshalb grundsätzlich nicht gelesen sondern nur beschrieben werden.

Im in der Figur 2a gezeigten Beispiel für eine Struktur für einen Ringpuffer mit Speicherzellen im Zustand vor dem Einschreiben des Datensatzes 15 ist dies der Datensatz 9. Somit können vom Servicetechniker die Datensätze 10 bis 14 ausgelesen und ausgewertet werden.

Im in der Figur 2b gezeigten Beispiel nach dem Einschreiben des Datensatzes 15 ist dies der Datensatz 10. Somit können vom Servicetechniker die Datensätze 11 bis 15 ausgelesen und ausgewertet werden. Der Mikroprozessor 30 ist entsprechend programmiert ist, um diese Speicherzelle für jedwede Lesezugriffe ignorieren, auf welche der erste Zeiger Z1 zeigt. Das Auslesen eines Datensatzes aus den anderen Speicherzellen, auf welche ein zweiter Zeiger Z2 zeigt, wird aber ermöglicht. Wenn der vorgesehene Speicherbereich voll geschrieben und das Speicherbereichsende erreicht ist, wird auf den Anfang zurückverzweigt und der zuerst abgelegte Datensatz überschrieben. Mindestens ein erster Zeigerzähler enthält einen ersten Zeiger Z1 der auf die Speicherzelle des letzten bzw. nach Inkrementierung auf die Speicherzelle des nächsten zu beschreibenden Datensatzes zeigt. Die Inkrementierung erfolgt durch eine Prozessorinstruktion. Vorzugsweise wird der erste Zeiger Z1 zur nichtflüchtigen Speicherung in einer weiteren Speicherzelle ZELLE Z des Schreib/Lese-Speichers 39 gespeichert.

Durch weitere erfindungsgemäße Maßnahmen ist es extrem unwahrscheinlich, daß der Zählerstand durch einen Abbruch bei seiner Veränderung zerstört oder mit einem unkorrekten Stand belegt wird, was die Datensicherheit weiter erhöht. Bei einem unkorrekten Zählerstand Z1 des ersten Zeigerzählers wäre kein korrekter Zugriff auf die Datensätze in den Speicherzellen möglich. Erfindungsgemäß wird die Inkrementierung vom Mikroprozessor 30 in einem Taktzyklus durchgeführt. Die Zeitspanne wird dadurch so kurz, daß es extrem unwahrscheinlich wäre, wenn der Zählerstand ausgerechnet während einer Spannungsunterbrechung inkrementiert werden würde. Beispielsweise ist der Zeigerzähler nur 1 Byte klein, was die Wahrscheinlichkeit eines Fehlers bereits verringert und außerdem wird eine bestimmte Technik bezüglich des definierten Stoppens des Mikroprozessorsystems bei Spannungsausfall angewandt, so daß es völlig sicher ist, daß der Zählerstand bei Spannungsausfall nicht zerstört oder beeinflußt wird. Die Technik bezüglich des definierten Stoppens des Mikroprozessorsystems bei Spannungsausfall basiert auf einer Hardware, welche sichert, daß immer mindestens die gerade vom Prozessor abgearbeitete Instruktion vollständig zu Ende geführt werden kann. Die vorgenannte Hardware kann Bestandteil des Mikroprozessors 30 oder eine separate Baugruppe sein, welche am Mikroprozessor entsprechend angeschlossen ist.

Das Verfahren zur Verbesserung der Datensicherheit mittels Ringpuffer geht von einem Mikroprozessor aus, der mit einem Programmspeicher den Ringpuffer bildet, indem mindestens einer der Speicherbereiche eines nichtflüchtigen Schreib/Lese-Speichers durch einen Zeigerzähler verwaltet wird und im Speicherbereich eine bestimmte Anzahl von gleichartigen Datensätzen gespeichert wird, wobei ein auslesbarer und beschreibbarer Ringpuffer im nichtflüchtigen Schreib/Lese-Speicher (39) entsteht. Erfindungsgemäß ist das Verfahren **gekennzeichnet** durch die Schritte:
- Einspeicherung eines Datensatzes in eine ausgewählte Speicherzelle des Ringpuffers, der aus einer Anzahl an Speicherzellen besteht und um eine Speicherzelle erweitert ist,
- Überschreiben des jeweils älteste Datensatz beim Schreibvorgang und Erhöhen des Zeigerzählerstandes eines ersten Zeigers Z1 nachdem der neue Datensatz in eine Speicherzelle, in der sich vorher der älteste Datensatz befand, eingeschrieben wurde, so daß der erste Zeiger Z1 nun auf eine Speicherzelle mit einem jetzt ältestem Datensatz zeigt, der beim nächsten Schreibvorgang überschrieben werden darf, sowie
- Verhindern des Auslesens der jeweiligen Speicherzelle, auf welche der Zeiger Z1 zeigt.

Die Inkrementierung des Zählerstandes wird durch eine Prozessorinstruktion ebenfalls innerhalb eines einzigen Taktzykluses durchgeführt. Auf das vorgenannte Überschreiben anschließend durchführbar, ist ein Auslesen eines Datensatzes aus einer der Anzahl an Speicherzellen, wobei das Auslesen eines Datensatzes aus derjenigen Speicherzelle erfolgt, auf die der Zeiger Z1 gerade nicht zeigt und auf die ein zweiter Zeiger Z2 zeigt.

Bei Spannungsausfall erfolgt eine vollständige Abarbeitung der gerade vom Prozessor abgearbeiteten Instruktion. Bei Spannungsausfall ist weiter ein definiertes Stoppen des Mikroprozessorsystems vorgesehen

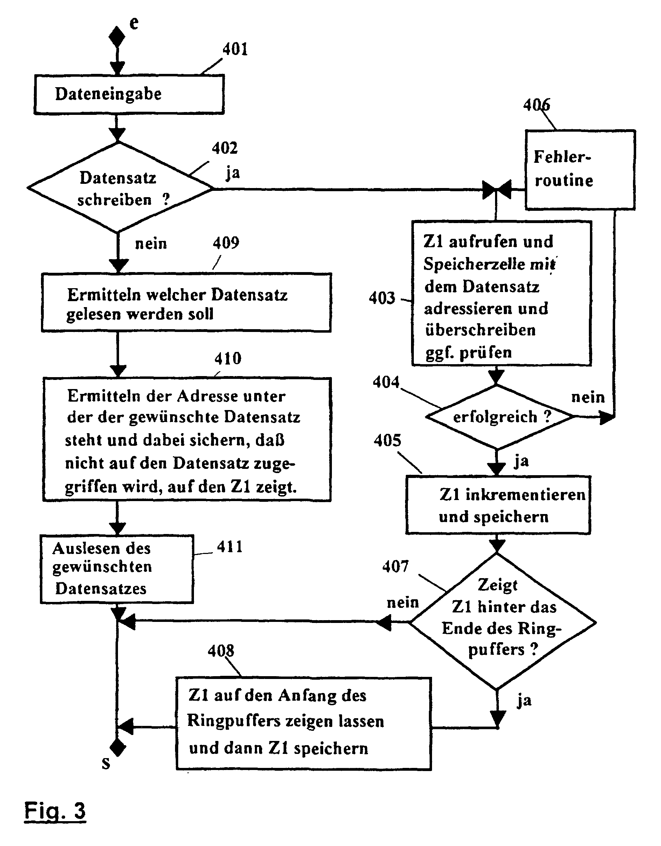

Gemäß Fig.3 ist ein Flußplan für den Betrieb des Ringpuffers dargestellt. Eine solche Routine kann jederzeit aufgerufen werden, beispielsweise nach dem Start während einer Initialisierungsroutine und ebenso während des laufenden Betriebes der Frankiermaschine. Beispielsweise wird in einer Routine der Frankiermaschine aufgrund eines Ereignisses in einem ersten Schritt 401 eine automatische Dateneingabe in den flüchtigen Arbeitsspeicher RAM 40 vorgenommen. Ein solches Ereignis kann beispielsweise die Feststellung eines Fehlers oder Abfrage eines solchen bereits nichtflüchtig gespeicherten Fehlers sein. In einem zweiten Schritt 402 wird festgestellt, ob ein Datensatz zu schreiben ist. Ist das der Fall, wird auf einen dritten Schritt 403 verzweigt. Ist das aber nicht der Fall, wird auf einen neunten Schritt 409 verzweigt, um zu ermitteln, welcher Datensatz gelesen werden soll. Anschließend erfolgt im zehnten Schritt 410 ein Ermitteln der Adresse für diejenige Speicherzelle in welcher der gewünschte Datensatz steht. Dabei wird durch eine Subroutine gesichert, daß nicht auf den Datensatz zugegriffen wird, auf den der Zeiger Z1 zeigt. In der - nicht gezeigten - Subroutine wird geprüft, ob der Zeigerstand Z2 gleich dem Zeigerstand Z1 ist, um gegebenfalls auf eine Fehlerroutine zu verzweigen und/oder zur automatischen Weiterschaltung des Zeigerstandes des zweiten Zeigers Z2 zwecks Adressierung einer anderen Speicherzelle. War der in der Subroutine des Schrittes 410 festgestellte Zeigerstand Z2 ungleich dem Zeigerstand Z1, wird zum Auslesen des gewünschten Datensatzes im nächstfolgenden Schritt 411 verzweigt. Anschließend wird der Punkt S der Systemroutine erreicht, um den weiteren vorgesehenen Programmablauf bzw. Betrieb der Frankiermaschine zu ermöglichen.

Wurde aber im zweiten Schritt 402 festgestellt, daß ein Datensatz zu schreiben ist, wird auf den dritten Schritt 403 verzweigt, um aus der Speicherzelle Z des nichtflüchtigen Speichers 39 den Zeigerstand des ersten Zeigers Z1 aufzurufen. Damit kann die betreffende Speicherzelle aus der Anzahl an Speicherzellen 1 bis N+1 des nichtflüchtigen Speichers 39 adressiert werden, auf welche der erste Zeiger Z1 zeigt. Der in der so adressierten Speicherzelle befindliche älteste Datensatz kann nun mit einem neuen Datensatz überschrieben werden. Beispielsweise kann der neue Datensatz ein aktueller Datensatz mit einer Fehlerinformation sein, welche nicht zur Außerbetriebsetzung der ganzen Frankiermaschine führt. Außerdem wird im Schritt 403 geprüft, ob das vorgenannte Überschreiben tatsächlich durchgeführt wurde. Nach der Abarbeitung des Schrittes 403 wird im Schritt 404 überprüft, ob das vorgenannte Überschreiben im Schritt 403 erfolgreich durchgeführt wurde. Ist das der Fall, wird auf einen fünften Schritt 405 verzweigt, um den Zählerstand des Zeigers Z1 zu inkrementieren und um diesen anschließend in der Speicherzelle Z des nichtflüchtigen Speichers 39 zu speichern. Ist das aber nicht der Fall, wird vom Schritt 404 auf einen sechsten Schritt 406 verzweigt, um eine Fehlerroutine auszuführen. Bestandteil dieser Fehlerroutine kann beispielsweise ein erneuter Versuch sein, den ältesten Datensatz oder den zweitältesten Datensatz im dritten Schritt 403 zu überschreiben, bevor eine Fehlermeldung erfolgt. Im Ergebnis der Durchführung des fünften Schrittes 405 mit Speicherung des Zählerstandes des Zeigers wird im nachfolgenden siebenten Schritt 407 abgefragt, ob das Ende der Adressierung der Speicherzellen des Ringpuffers 3 erreicht ist. Zeigt der Zählerstand des Zeigers Z1 hinter das Ende des Ringpuffers 3, d.h. das Ende der Adressierung der Speicherzellen des Ringpuffers 3 ist erreicht, wird auf einen achten Schritt 408 verzweigt. Anderenfalls wird zum Punkt S verzweigt. Im achten Schritt 408 erfolgt ein Rücksetzen des Zählerstandes des Zeigers Z1 auf den Anfang des Ringpuffers 3 einschließlich seiner Speicherung.

Nach dem vorgenannten Überschreiben im dritten Schritt wird nach dem Durchlaufen der vorstehend genannten weiteren Schritte durch einen weiteren Zeiger Z2 wieder im elften Schritt 411 ein Auslesen eines Datensatzes aus einer der Anzahl an Speicherzellen ermöglicht, d.h. aus derjenigen Speicherzelle, auf die der Zeiger Z1 gerade nicht zeigt.

Im Lösungsgedanken seien auch modifizierte Varianten mit umfaßt. Beispielsweise solche, wenn im Schritt 405 Z1 nicht inkrementiert wird, sondern dekrementiert wird und wenn im siebenten Schritt 407 positiv abgefragt wurde, daß der Anfang der Adressierung der Speicherzellen des Ringpuffers 3 erreicht ist, dann muß folglich im achten Schritt 408 der Zählerstand des Zeigers Z1 auf das Ende des Ringpuffers 3 gesetzt werden.

Die Erfindung ist nicht auf die vorliegenden Ausführungsform beschränkt, da offensichtlich weitere andere Anordnungen bzw. Ausführungen des Verfahrens für andere informationsverarbeitende Einrichtungen entwickelt bzw. eingesetzt werden können, die vom gleichen Grundgedanken der Erfindung ausgehend, von den anliegenden Ansprüchen umfaßt werden.

## Patentansprüche

1. Anordnung zur Verbesserung der Datensicherheit mittels Ringpuffer, wobei ein aus einer Anzahl (N) an Speicherzellen bestehender Ringpuffer (3) gebildet wird, indem mindestens einer der Speicherbereiche eines nichtflüchtigen Schreib/Lese-Speichers (39) durch einen Zeigerzähler verwaltet wird und im Speicherbereich eine bestimmte Anzahl von gleichartigen Datensätzen gespeichert wird, mit einem Mikroprozessor (30), der über einen BUS (34) mit einem Programmspeicher (38) verbunden ist, mit welchem der Mikroprozessor (30) entsprechend programmiert ist, so daß ein auslesbarer und beschreibbarer Ringpuffer (3) im nichtflüchtigen Schreib/Lese-Speicher (39) entsteht, **dadurch gekennzeichnet,**
- **daß** der zur Speicherung von Datensätzen aus einer Anzahl (N) an Speicherzellen bestehende Ringpuffer (3) um eine Speicherzelle (N+1) erweitert wird,
- **daß** Mittel (30, 38, 100, 101) vorgesehen sind, um einen zyklischen Zeigerzähler zu bilden, wobei bei einem Schreibvorgang der jeweils älteste Datensatz überschrieben wird und wobei der Zeigerzähler erhöht wird, nachdem der neue Datensatz in eine Speicherzelle, in der sich vorher der älteste Datensatz befand, eingeschrieben wurde, so daß der Zeiger (Z1) des vorgenannten Zeigerzählers nun auf eine Speicherzelle mit einem jetzt ältesten Datensatz zeigt, der beim nächsten Schreibvorgang überschrieben werden darf, sowie
- **daß** Mittel (38, 121) vorgesehen sind, wododurch der Mikroprozessor (30) entsprechend programmiert ist, um die jeweilige Speicherzelle für jedwede Lesezugriffe zu ignorieren, auf welche der Zeiger (Z1) des zyklischen Zeigerzählers zeigt.

2. Anordnung, nach Anspruch 1, **dadurch gekennzeichnet, daß** die Inkrementierung des Zählerstandes durch eine Prozessorinstruktion innerhalb eines Taktzyklusses erfolgt und daß ein eine vollständige Abarbeitung der gerade vom Prozessor abgearbeiteten Instruktion sichemdes Hardwaremittel Bestandteil des Mikroprozessors (30) oder eine separate Baugruppe ist, welche am Mikroprozessor entsprechend angeschlossen ist.

3. Anordnung, nach den Ansprüchen 1 und 2, **dadurch gekennzeichnet, daß** Mittel (30, 38, 120, 121) vorgesehen sind, um einen weiteren Zeigerzähler mit einem Zeiger (Z2) zum Auslesen der Daten aus den Speicherzellen zu bilden, wobei der Zeigerzählerstand des weiteren Zeigers (Z2) in einer weiteren Speicherzelle nichtflüchtig im Schreib/Lese-Speichers (39) oder flüchtig im Arbeitsspeicher RAM (40) gespeichert wird, der über den BUS (34) mit dem Mikroprozessor (30) und dem Programmspeicher (38) verbunden ist.

4. Anordnung, nach den Ansprüchen 1 bis 3, **dadurch gekennzeichnet, daß** softwaremäßige Mittel (101, 121) im Programmspeicher (38) vorgesehen sind, wodurch der Mikroprozessor (30) entsprechend programmiert worden ist, um den zyklischen Zeigerzähler zum Schreiben der Daten bzw. den weiteren Zeigerzähler zum Auslesen der Daten zu bilden.

5. Anordnung, nach den Ansprüchen 1 bis 4, **dadurch gekennzeichnet, daß** der Zeiger (Z1) zur nichtflüchtigen Speicherung in einer weiteren Speicherzelle (ZELLE Z) des Schreib/Lese-Speichers (39) gespeichert wird.

6. Verfahren zur Verbesserung der Datensicherheit mittels Ringpuffer, mit einem Mikroprozessor (30), der mit einem Programmspeicher (38) den Ringpuffer der aus einer Anzahl (N) an Speicherzellen besteht, bildet, indem mindestens einer der Speicherbereiche eines nichtflüchtigen Schreib/Lese-Speichers (39) durch einen Zeigerzähler verwaltet wird und im Speicherbereich eine bestimmte Anzahl von gleichartigen Datensätzen gespeichert wird, wobei ein auslesbarer und beschreibbarer Ringpuffer im nichtflüchtigen Schreib/Lese-Speicher (39) entsteht, **gekennzeichnet durch** die Schritte:
- Einspeicherung eines Datensatzes in eine ausgewählte Speicherzelle des Ringpuffers, der aus einer Anzahl (N) an Speicherzellen besteht und um eine Speicherzelle (N+1) erweitert wird,
- Überschreiben des jeweils älteste Datensatz beim Schreibvorgang und Erhöhen des Zeigerzählerstandes eines ersten Zeigers (Z1) nachdem der neue Datensatz in eine Speicherzelle, in der sich vorher der älteste Datensatz befand, eingeschrieben wurde, so daß der erste Zeiger (Z1) nun auf eine Speicherzelle mit einem jetzt ältesten Datensatz zeigt, der beim nächsten Schreibvorgang überschrieben werden darf, sowie
- Verhindern des Auslesens der jeweiligen Speicherzelle, auf welche der erste Zeiger (Z1) zeigt.

7. Verfahren, nach Anspruch 6, **gekennzeichnet durch** ein auf das vorgenannte Überschreiben anschließend durchführbares Auslesen eines Datensatzes aus einer der Anzahl an Speicherzellen, wobei das Auslesen eines Datensatzes aus derjenigen Speicherzelle erfolgt, auf die der Zeiger(Z1)gerade nicht zeigt und auf die ein zweiter Zeiger (Z2) zeigt.

8. Verfahren, nach Anspruch 6, **gekennzeichnet durch** eine vollständige Abarbeitung der gerade vom Prozessor abgearbeiteten Instruktion.

9. Verfahren, nach Anspruch 8, **gekennzeichnet durch** eine vollständige Abarbeitung der gerade vom Prozessor abgearbeiteten Instruktion, wobei die Inkrementierung des Zählerstandes **durch** eine Prozessorinstruktion innerhalb eines Taktzykluses durchgeführt wird.

10. Verfahren, nach Anspruch 8, **gekennzeichnet durch** ein definiertes Stoppen des Mikroprozessorsystems bei Spannungsausfall im Anschluß an die vollständige Abarbeitung der gerade vom Prozessor abgearbeiteten Instruktion.

## Claims

1. An arrangement for the improvement of data integrity by means of a ring buffer, wherein a ring buffer (3) consisting of a number (N) of memory cells is formed by administering at least one of the memory areas of a non-volatile read/write memory (39) by means of a pointer-counter and storing a certain number of data records of the same kind in the memory area; with a microprocessor (30) that is connected via BUS (34) to a program memory (38) by which the microprocessor (30) is respectively programmed; so that there is formed a readable and writeable ring buffer (3) in the non-volatile read/write memory (39), **characterised in**
- **that** the ring buffer (3) for the storage of data records consisting of a number (N) of memory cells is extended by one memory cell (N+1);
- **that** there are provided means (30, 38, 100, 101) to form a cyclical pointer-counter, wherein, in a writing process, the respectively oldest data record is overwritten and wherein the pointer-counter is increased after the new data record has been written into a memory cell that contained the oldest data record before so that the pointer (Z1) of said pointer-counter now points at a memory cell that now contains an oldest data record that can be overwritten again in the next writing process; and
- **that** there are provided means (38, 121) by which the microprocessor (30) is respectively programmed to ignore, with regard to any reading access, the respective memory cell that the pointer (Z1) of the cyclical pointer-counter is pointing at.

2. An arrangement according to Claim 1, **characterised in that** the incrementing of the counter position is done by means of a processor instruction within a timing cycle and that a hardware means securing the complete execution of the instruction being executed by the processor is either part of the microprocessor (30) or forms a separate subassembly that is connected to said microprocessor.

3. An arrangement according to Claims 1 and 2, **characterised in that** there are provided means (30, 38, 120, 121) to form another pointer-counter with a pointer (Z2) for reading the data from the memory cells, wherein the pointer-counter position of the further pointer (Z2) is stored in a non-volatile manner in a further memory cell in the read/write memory (39) or in a volatile manner in the RAM (40) that is connected via the BUS (34) to the microprocessor (30) and to the program memory (38).

4. An arrangement according to Claims 1 to 3, **characterised in that** software means (101, 121) are provided in the program memory (38) by which the microprocessor (30) has been respectively programmed to form the cyclical pointer-counter for writing the data and the further pointer-counter for reading the data.

5. An arrangement according to Claims 1 to 4, **characterised in that** the pointer (Z1) is stored in a further memory cell (CELL Z) of the reed/write memory (39) for non-volatile storage.

6. A method for the improvement of data integrity by means of a ring buffer, having a microprocessor (30) that together with a program memory (38) forms the ring buffer that consists of a number (N) of memory cells, wherein at least one of the memory areas of a non-volatile read/write memory (39) is administered by a pointer-counter and a certain number of data records of the same kind is stored in the memory area, so that there is formed a readable and writeable ring buffer in the non-volatile read/write memory (39), **characterised by** the following steps:
- Storage of a data record in a selected memory cell of the ring buffer that is formed by a number (N) of memory cells and is extended by one memory cell (N+1);
- Overwriting of the respectively oldest data record during the writing process and increase of the pointer-counter position of a first pointer (Z1) after the new data record has been written into a memory cell that contained the oldest data record before so that the first pointer (Z1) now points at a memory cell that now contains an oldest data record that can be overwritten again in the next writing process; and
- Prevention of the reading of the respective memory cell that the first pointer (Z1) is pointing at.

7. A method according to Claim 6, **characterised by** a reading of a data record from one of the number of memory cells that can be performed after the above-mentioned overwriting, wherein a data record is read from a memory cell which pointer (Z1) is not pointing at and which is pointed at by a second pointer (Z2) at that moment.

8. A method according to Claim 6, **characterised by** a complete execution of the instruction being executed by the processor.

9. A method according to Claim 8, **characterised by** a complete execution of the instruction being executed by the processor, wherein the incrementing of the counter position is done by means of a processor instruction within a timing cycle.

10. A method according to Claim 8, **characterised by** a defined stopping of the microprocessor system in case of a voltage loss after the complete execution of the instruction being executed by the processor.

## Revendications

1. Agencement destiné à l'amélioration de la sécurité des données au moyen de tampon sur tore, un tampon sur tore (3) étant formé à partir d'un nombre (N) de cellules de mémoire, en gérant au moins une des zones de mémoire d'une mémoire à lecture-écriture (39) non volatile par un compteur à pointeur et en mémorisant dans la zone de mémoire un certain nombre d'enregistrements de données de même type, comportant un microprocesseur (30) qui est relié via un bus (34) à une mémoire de programme (38) avec laquelle le microprocesseur (30) est programmé d'une manière adéquate donnant ainsi naissance à un tampon sur tore (3) à lire et à écrire dans la mémoire à écriture-lecture (39), **caractérisé**
- **en ce que** le tampon sur tore (3) composé d'un nombre (N) de cellules de mémoire pour la mémorisation d'enregistrements de données est étendu d'une cellule de mémoire (N+1),
- **en ce qu'**il est prévu des moyens (30, 38, 100, 101) pour former un compteur à pointeur cyclique, lors d'une opération d'écriture l'enregistrement de données respectivement le plus ancien étant écrasé et le compteur à pointeur étant augmenté après que le nouvel enregistrement de données a été inscrit dans une cellule de mémoire dans laquelle se trouvait auparavant l'enregistrement de données le plus ancien de telle sorte que le pointeur (Z1) du compteur à pointeur susnommé indique une cellule de mémoire avec un enregistrement de données maintenant le plus ancien qui peut être écrasé lors de la prochaine d'écriture, et
- **en ce qu'**il est prévu des moyens (38, 121) permettant de programmer d'une manière adéquate le microprocesseur (30) afin d'ignorer la cellule de mémoire respective pour chaque accès à la lecture sur lequel indique le pointeur (Z1) du compteur à pointeur cyclique.

2. Agencement selon la revendication 1, **caractérisé en ce que** l'incrémentation de la position du compteur a lieu par une instruction de processeur à l'intérieur d'un cycle de synchronisation et **en ce que** un moyen matériel assurant un traitement complet de l'instruction traitée justement par le processeur est un élément du microprocesseur (30) ou un module séparé lequel est branché d'une manière adéquate sur le microprocesseur.

3. Agencement selon les revendications 1 et 2, **caractérisé en ce qu'**il est prévu des moyens (30, 38, 120, 121) pour former un autre compteur à pointeur avec un pointeur (Z2) destiné à lire les données émanant des cellules de mémoire, la position de compteur de l'autre pointeur (Z2) étant mémorisée dans une autre cellule de mémoire d'une manière non-volatile dans la mémoire à écriture-lecture (39) ou d'une manière volatile dans la mémoire de travail RAM (40) qui est reliée via le bus (34) au microprocesseur (30) et à la mémoire de programme (38).

4. Agencement selon les revendications 1 à 3, **caractérisé en ce que** des moyens de logiciel (101, 121) sont prévus dans la mémoire à programme (38) permettant de programmer d'une manière adéquate le microprocesseur (30) afin de former le compteur à pointeur cyclique pour écrire les données et l'autre compteur à pointeur pour lire les données.

5. Agencement selon la revendication 1 à 4, **caractérisé en ce que** le pointeur (Z1) est mémorisé pour la mémorisation non volatile dans une autre cellule de mémoire (CELLULE Z) de la mémoire à écriture-lecture (39).

6. Agencement destiné à l'amélioration de la sécurité des données au moyen de tampon sur tore, comportant un microprocesseur (30) qui forme avec une mémoire de programme (38) le tampon sur tore qui se compose d'un nombre (N) de cellules de mémoire, en gérant au moins une des zones de mémoire d'une mémoire à lecture-écriture (39) non volatile par un compteur à pointeur et en mémorisant dans la zone de mémoire un certain nombre d'enregistrements de données de même type, donnant ainsi naissance à un tampon sur tore (3) à lire et à écrire dans la mémoire à écriture-lecture (39), **caractérisé par** les étapes:
- mémorisation d'un enregistrement de données dans une cellule de mémoire sélectionnée du tampon sur tore qui se compose d'un nombre (N) de cellules de mémoire et qui est étendu d'une cellule de mémoire (N+1),
- écrasement de l'enregistrement de données respectivement le plus ancien lors de l'opération d'écriture et augmentation de la position du compteur à pointeur d'un premier pointeur (Z1) après que le nouvel enregistrement de données a été inscrit dans une cellule de mémoire dans laquelle se trouvait auparavant l'enregistrement de données le plus ancien de telle sorte que le premier pointeur (Z1) indique une cellule de mémoire avec un enregistrement de données maintenant le plus ancien qui peut être écrasé lors de la prochaine d'écriture, et
- empêchement de lecture de la cellule de mémoire respective sur laquelle indique le premier pointeur (Z1).

7. Procédé selon la revendication 6, **caractérisé par** une lecture d'un enregistrement de données, réalisable ensuite sur l'écrasement susnommé, émanant d'un du nombre de cellules de mémoire, la lecture d'un enregistrement de données ayant lieu de la cellule de mémoire que le pointeur (Z1) n'indique justement pas et qu'un deuxième pointeur (Z2) indique.

8. Procédé selon la revendication 6, **caractérisé par** un traitement complet de l'instruction traitée justement par le processeur.

9. Procédé selon la revendication 8, **caractérisé par** un traitement complet de l'instruction justement traité par le processeur, l'incrémentation de la position du compteur étant réalisée par une instruction de processeur à l'intérieur d'un cycle de synchronisation.

10. Procédé selon la revendication 8, **caractérisé par** un arrêt défini du système de microprocesseur en cas de panne de tension suite au traitement complet de l'instruction justement traitée par le processeur.
